# EUROPEAN PATENT APPLICATION

(11) **EP 3 199 315 A1**
(43) Date of publication of application: **02.08.2017**
(21) Application number: 16184181.2
(22) Date of filing: 15.08.2016
(51) Int. Cl.: B29B 11/14

(54) **PLASTIC BLANK**

(30) Priority: 29.01.2016 TW 105102808
(71) Applicant: Liu, Chun Ten, Taichung City 407 (TW); Liu, Chang Hsien, Taoyuan City (TW)
(72) Inventor: Liu, Chun Ten, Taichung City 407 (TW); Liu, Chang Hsien, Taoyuan City (TW)
(74) Representative: Cabinet Chaillot

(57) **Abstract**

A plastic blank includes a blank structure (1). The blank structure (1) includes an elongate body portion (11) and a head portion (12). One of two ends of the body portion (11) is closed, and the head portion (12) is connected to the other end of the body portion (11). The body portion (11) has a space (13) therein. The head portion (12) has an opening (14) communicating with the space (13). The outer periphery (111) of the body portion (11) is even so that a stick having product labelling can be attached onto the outer periphery (111) of the body portion (11). The inner periphery (112) of the body portion (11) has a plurality of ribs (15) protruded inward the space (13) and extending along the body portion (11) to improve the structural strength of the body portion (11) along the length direction.

## Description

### BACKGROUND OF THE INVENTION

### Field of the Invention

The present invention relates to a plastic blank, in particular to a plastic blank for blow molding.

### Description of the Prior Art

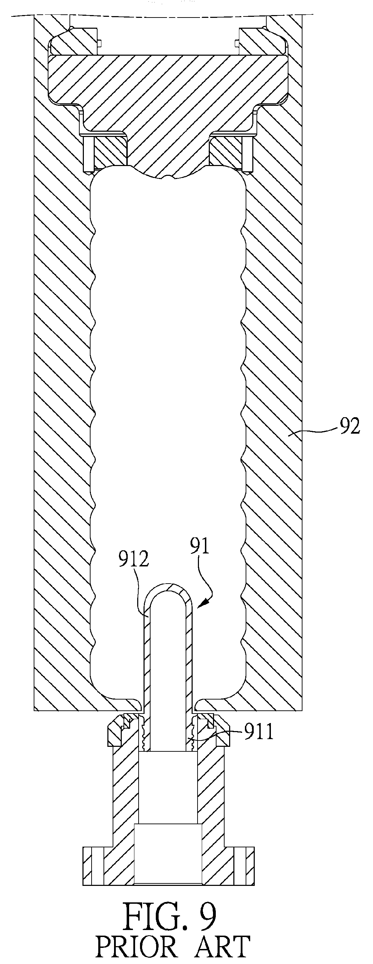

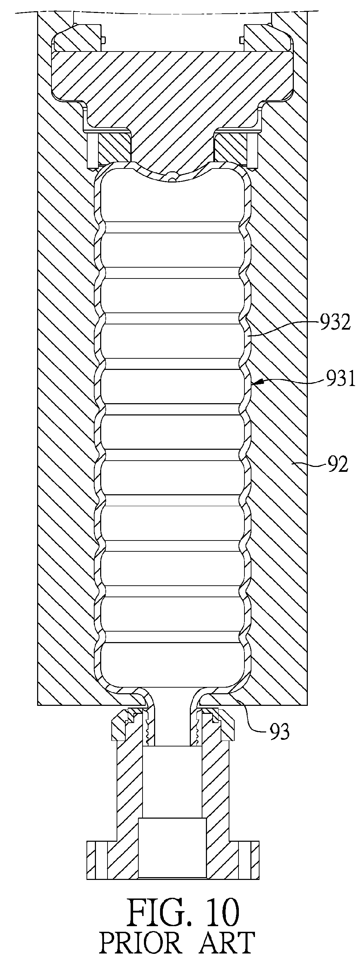

A shown in Fig. 9, the head portion 911 of a conventional plastic blank 91 is fixed and the body portion 912 of the plastic blank 91 project into a mold 92. After blow molding and cooling procedures, the plastic blank 91 becomes a bottle 93, as shown in Fig. 10. The outer peripheral surface 931 of the bottle 93 is uneven because the profile of the cavity 921 of the mold 92 is uneven. The protruded portions of the outer peripheral surface 931 form transverse annular ribs 932 which improve the structural strength of the bottle 93 along its width direction. After the bottle 93 is formed, a stick having the product labelling (not shown) is attached onto the outer peripheral surface 931 of the bottle 93, and commonly the stick is attached on a relative flat portion of the bottle 93 or attached around the outer peripheral surface 931 of the bottle 93.

The outer peripheral surface 931 of the bottle 93 blow-molded by the conventional blank 91 is uneven. Therefore, the stick is attached on the protruded portions of the outer peripheral surface 931 of the bottle 93 and is not attached on the recessed portions of the outer peripheral surface 931 of the bottle 93. Accordingly, the stick cannot be firmly attached onto the bottle 93 and would be detached from the bottle 93 easily.

In addition, the annular ribs 932 can improve the structural strength along the width direction of the bottle 93 but not the length direction of the bottle 93. Therefore, when the bottle 93 is pressed, the bottle 93 would deform easily along its length direction.

### SUMMARY OF THE INVENTION

One object of the present invention is to solve the aforementioned problems and to provide a plastic blank. A bottle produced by the plastic blank has an even surface, so that a stick having product labelling can be smoothly attached onto the surface of the bottle, and the stick would not detach from the bottle easily. In addition, the ribs formed in the plastic blank improve the structural strength in longitudinal direction of the bottle, so that the bottle would not deform easily when being pressed.

To achieve the above and other objects, a plastic blank is provided and comprises a hollowed blank structure. The blank structure comprises a body portion and a head portion. The body portion is elongate shaped. One of two ends of the body portion is closed and the head portion is connected to the other end of the body portion. The body portion defines a space therein. The head portion has an opening communicating with the space. The outer periphery of the body portion is an even surface, and the inner periphery of the body portion has a plurality of ribs each protruded inward the space and extending along the body portion.

Advantageously, each of the ribs is linearly extending at the inner periphery of the body portion along the length direction of the body portion, each of the ribs is equally spaced from adjacent ribs, and the ribs are annularly aligned over the body portion.

Each of the ribs may be inclinedly extending at the inner periphery of the body portion with respect to the length direction of the body portion.

The extension length of each of the ribs may be equal to the length of the body portion.

The extension length of each of the ribs may be less than the length of the body portion.

### BRIEF DESCRIPTION OF THE DRAWINGS

Fig. 1 illustrates a perspective view of a blank according to a first embodiment of the present invention;
Fig. 2 illustrates a top view of the blank according to the first embodiment of the present invention;
Fig. 3 illustrates a sectional view showing the blank of the first embodiment is positioned in a mold;
Fig. 4 illustrates a sectional view showing the blank of the first embodiment is blow-molded in the mold to form a bottle;
Fig. 5 illustrates a sectional view showing the blank of the first embodiment is blow-molded in a mold shown in Figs. 9 and 10 to form a bottle;
Fig. 6 illustrates a perspective view of a blank according to a second embodiment of the present invention;
Fig. 7 illustrates a top view of the blank according to the second embodiment of the present invention;
Fig. 8 illustrates a sectional view showing the blank of the second embodiment is positioned in a mold;
Fig. 9 illustrates a sectional view showing a conventional blank is positioned in a mold; and
Fig. 10 illustrates a sectional view showing the conventional blank is blow-molded in the mold to form a bottle.

### DETAILED DESCRIPTION OF THE PREFERRED EMBODIMENTS

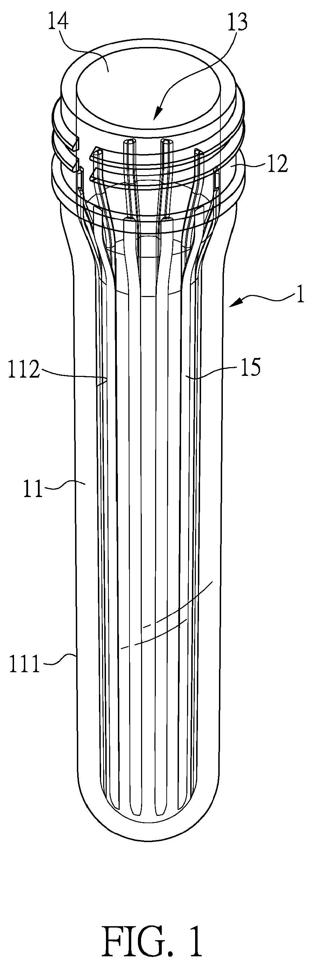

Please refer to Figs. 1 to 8, which illustrate a plastic blank according to embodiments of the present invention. The embodiments are provided for illustrative purposes only and not formed as limitations of the present invention.

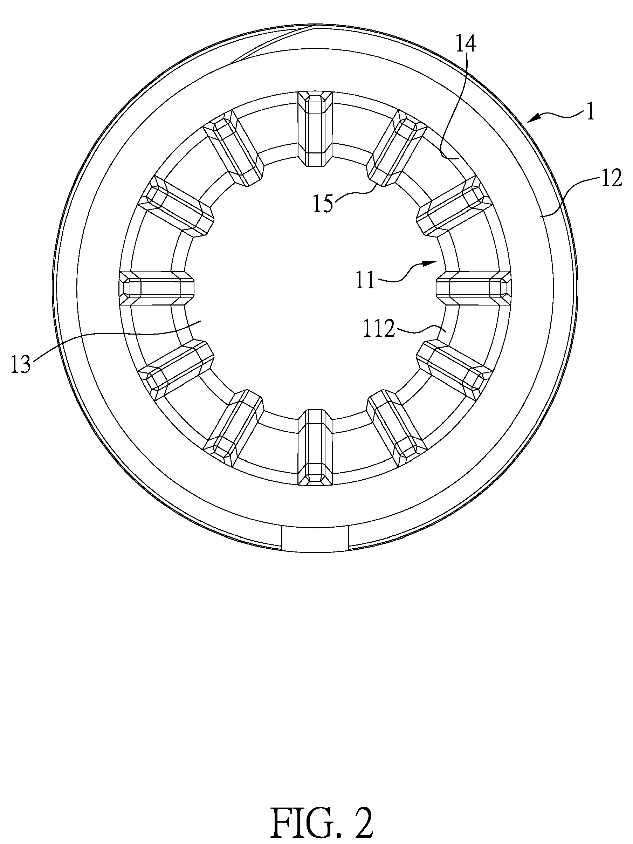

In the first embodiment, a plastic blank is provided, as shown in Figs. 1 and 2. The plastic blank comprises a hollowed blank structure 1. The blank structure 1 comprises a body portion 11 and a head portion 12. The body portion 11 is elongate shaped. One of two ends of the body portion 11 is closed and the head portion 12 is connected to the other end of the body portion 11. The body portion 11 defines a space 13 therein. The head portion 12 has an opening 14 communicating with the space 13. The outer periphery 111 of the body portion 11 is even. The inner periphery 112 of the body portion 11 has a plurality of ribs 15 each protruded inward the space 13 and extending along the body portion 11.

In addition, in this embodiment, each of the ribs 15 is linearly extending at the inner periphery 112 along the length direction of the body portion 11, and each of the ribs 15 is equally spaced from adjacent ribs 15, the ribs 15 are annularly aligned over the body portion 11, and the extension length of each of the ribs 15 is equal to the length of the body portion 11.

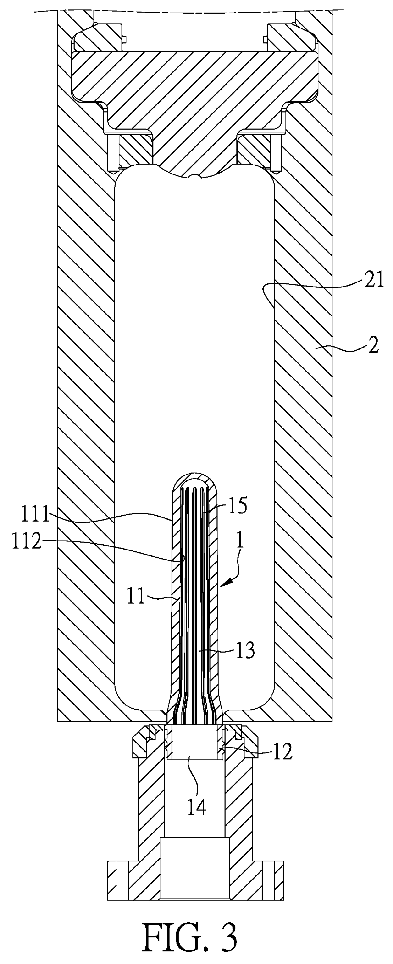

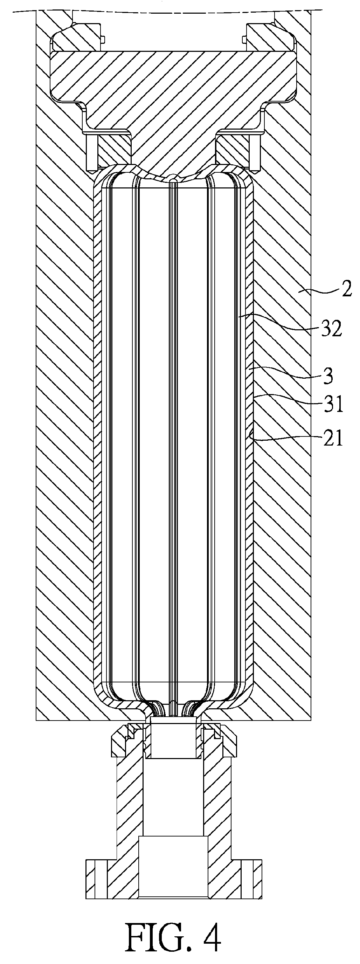

As shown in Figs. 3 and 4, in this embodiment, when the blank structure 1 is blow-molded in a mold 2, the head portion 12 of the blank structure 1 is positioned and the body portion 11 of the blank structure 1 project into a cavity 21 of the mold 2. Therefore, when blow molding technique is applied to the blank structure 1, the body portion 11 of the blank structure 1 is fitted with the cavity 21 of the mold 2 and a bottle 3 can be produced. The outer periphery of the bottle 3 corresponds to the inner profile of the cavity 21 and is an even surface 31, and the ribs 15 are blow-molded to form longitudinal rib structures 32 in the bottle 3. Accordingly, because the surface 31 of the bottle 3 is uniform and not uneven, a stick having product labelling can be smoothly attached onto the surface 31 of the bottle 3. In addition, because of the formation of the longitudinal rib structures 32, the structural strength along the length direction of the bottle 3 is improved, and the bottle 3 would not deform easily when the bottle 3 is pressed.

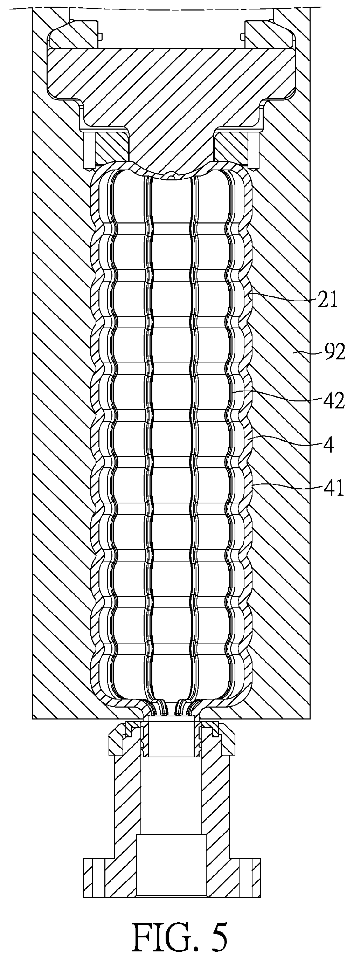

Alternatively, as shown in Fig. 5, the blank structure 1 can also be blow-molded in a conventional mold 92 to form a bottle 4. Accordingly, not only the surface 41 of the bottle 4 is uneven so as to improve the structural strength of the bottle 4 along its width direction, but also the bottle 4 has the longitudinal rib structures 42 therein so as to improve the structural strength of the bottle 4 along its length direction. Hence, when the bottle 4 is pressed, the bottle 4 would not deform easily.

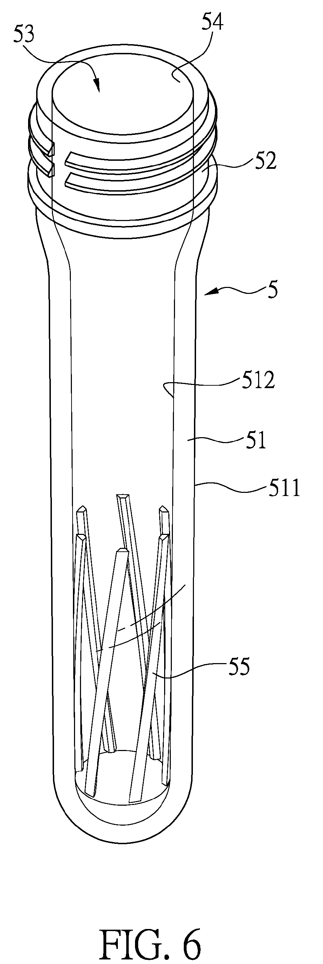

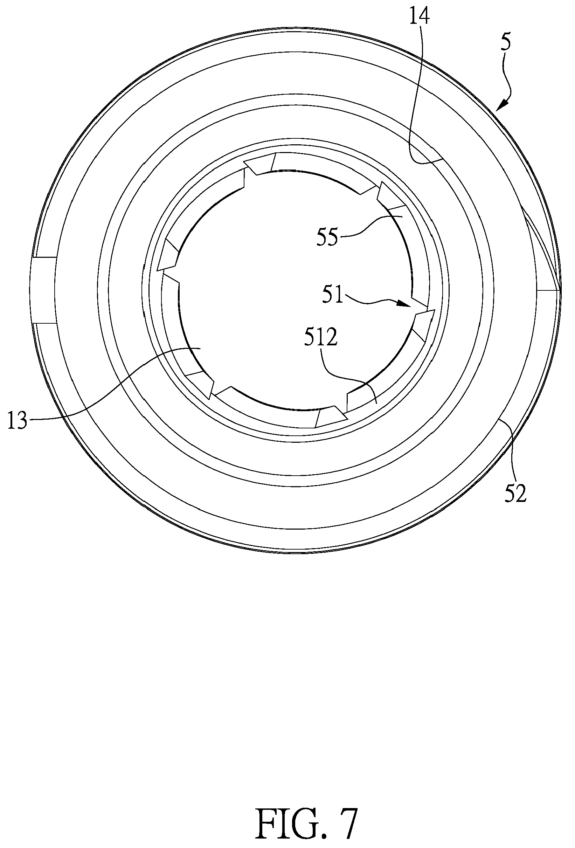

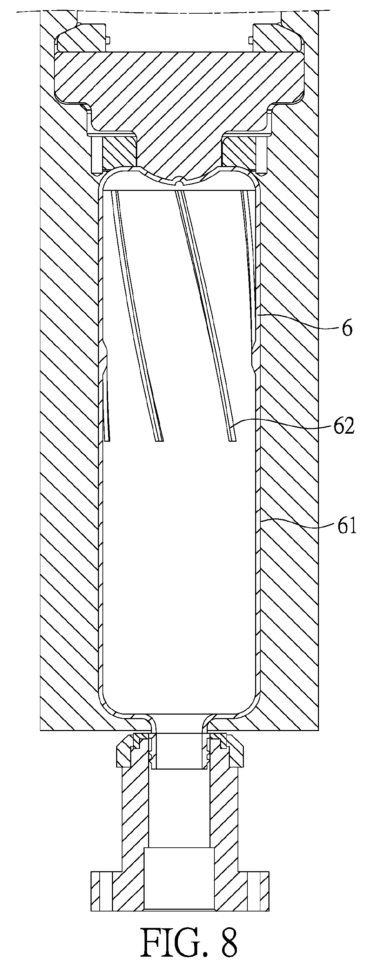

The present invention may have other embodiments which are variations therebetween. Please refer to Figs. 6 and 7, which illustrate a second embodiment of the present invention. The blank structure 5 also comprises a body portion 51 and a head portion 52. The body portion 51 has a space 53 therein. The head portion 52 has an opening 54. The outer periphery 511 of the body portion 51 is even. In this embodiment, each of the ribs 55 is inclinedly extending at the inner periphery 512 of the body portion 51 with respect to the length direction of the body portion 51, and the extension length of each of the ribs 55 is less than the length of the body portion 51. As shown in Fig. 8, a bottle 6 formed by the blank structure 5 of the second embodiment also has an even surface 51 and the bottle 6 further has a plurality of reinforce ribs 62 formed by the ribs 55. although the reinforce ribs 62 are shorter than the body portion 51, a better structural strength along the length direction of the body portion 51 can be provided as compared with a bottle formed by the conventional blank. In addition, a stick having product labelling can also be smoothly attached on the surface 61 of the bottle 6 of the second embodiment.

## Claims

1. A plastic blank comprising a hollowed blank structure (1, 5), **characterized in that** the blank structure (1, 5) comprises a body portion (11, 51) and a head portion (12, 52), the body portion (11, 51) is elongate shaped, one of two ends of the body portion (11, 51) is closed and the head portion (12, 52) is connected to the other end of the body portion (11, 51), the body portion (11, 51) defines a space (13, 53) therein, the head portion (12, 52) has an opening (14, 54) communicating with the space (13, 53), the outer periphery (111, 511) of the body portion (11, 51) is an even surface, and the inner periphery (112, 512) of the body portion (11, 51) has a plurality of ribs (15, 55), each of the ribs (15, 55) is protruded inward the space (13, 53) and extending along the body portion (11, 51).

2. The plastic blank according to claim 1, **characterized in that** each of the ribs (15) is linearly extending at the inner periphery (112) of the body portion (11) along the length direction of the body portion (11), each of the ribs (15) is equally spaced from adjacent ribs (15), and the ribs (15) are annularly aligned over the body portion (11).

3. The plastic blank according to claim 1, **characterized in that** each of the ribs (55) is inclinedly extending at the inner periphery (512) of the body portion (51) with respect to the length direction of the body portion (51).

4. The plastic blank according to claim 1, **characterized in that** the extension length of each of the ribs (15) is equal to the length of the body portion (11).

5. The plastic blank according to claim 1, **characterized in that** the extension length of each of the ribs (55) is less than the length of the body portion (51).
